# EUROPEAN PATENT APPLICATION

(11) **EP 4 597 477 A1**
(43) Date of publication of application: **06.08.2025**
(21) Application number: 25154325.2
(22) Date of filing: 28.01.2025
(51) Int. Cl.: G09B 23/28

(54) **DEMONSTRATION TOOL AND DEMONSTRATION METHOD**

(30) Priority: 30.01.2024 JP 2024012022
(71) Applicant: Kabushiki Kaisha Shofu, Kyoto-shi Kyoto 605-0983 (JP)
(72) Inventor: KOBAYASHI, Hiroyuki, Kyoto 605-0983 (JP); NAKAMURA, Tatsuya, Kyoto 605-0983 (JP)
(74) Representative: Eisenführ Speiser

(57) **Abstract**

The disclosure provides a demonstration tool and a demonstration method that enable stable preparation of each or one of a lost portion and a cavity at an arbitrary site of an artificial tooth, enable repair of the artificial tooth including each or one of the lost portion and the cavity with use of a dental filling composite resin, and then enable observation of a repaired site in a plurality of directions. A demonstration tool is used for demonstration including filling to cure a dental filling composite resin in each or one of a lost portion and a cavity of an artificial tooth, and the demonstration tool comprises at least one artificial tooth including an artificial tooth having each or one of a lost portion and a cavity, and a structure body supporting the at least one artificial tooth, wherein the structure body supporting the at least one artificial tooth is coupled to the at least one artificial tooth, and the at least one artificial tooth has a variable angle.

## Description

### TECHNICAL FIELD

The present invention relates to a demonstration tool and a demonstration method.

### BACKGROUND ART:

Dental caries occurs when acid generated by bacteria decalcifies dentin. A decayed tooth having dental caries is treated by mechanically scaling a carious portion and filling to cure a dental filling composite resin in a scaled site.

Treatment is largely varied in terms of result and degree of difficulty by color tone quality of the dental filling composite resin and usability quality upon extruding the dental filling composite resin from a syringe. Dental filling composite resins sold by various companies are known to be varied in terms of color tone and usability quality. In view of this, dental specialists such as dentists and dental hygienists may fill to cure a sample product of a dental filling composite resin in a molar having an occlusal surface provided with a cavity or the like to actually check color tone as demonstration before purchase of the dental filling composite resin manufactured by each company (Patent Document 1).

### Patent Document

Patent Document 1: JP 2019-211704 A

### SUMMARY

### Problems to be Solved by the Invention

Dental caries can be actually generated at various sites including an occlusal surface, a buccal surface, and a labial surface. Furthermore, a tooth may be cracked at various sites due to external physical impact. Dental specialists have had no way of actually checking performance of a dental filling composite resin before purchase with regard to whether or not the dental filling composite resin has color tone adapted to each or one of a lost portion and a cavity at each of the various sites, has exceptional sculptability, and achieves excellent usability quality of the syringe. Furthermore, conventional demonstration is typically executed with use of a molar having a flat surface on a dental root side of the molar an occlusal surface provided with a cavity. The molar has uneven surfaces other than the flat surface of the dental root side similarly to a shape of a normal tooth, and cannot be disposed stably if the uneven surface is directed downward. This leads to poor stability upon preparation of a lost portion or a cavity in any surface other than the occlusal surface, as well as difficult observation of a repaired site.

It is an object of the present invention to provide a demonstration tool and a demonstration method that enable stable preparation of each or one of a lost portion and a cavity at an arbitrary site of an artificial tooth, enable repair of the artificial tooth including each or one of the lost portion and the cavity with use of a dental filling composite resin, and then enable observation of a repaired site in a plurality of directions.

### Solutions to the Problems

The inventors of the present invention have found through diligent consideration that a predetermined demonstration tool and a predetermined demonstration method solve part or the entirety of the problems.

The present disclosure provides the following items.
(Item 1) A demonstration tool used for demonstration including filling to cure a dental filling composite resin in each or one of a lost portion and a cavity of an artificial tooth, the demonstration tool comprising:
   at least one artificial tooth (1) including an artificial tooth (1a) having each or one of a lost portion and a cavity; and
   a structure body (2) supporting the at least one artificial tooth (1),
   wherein
   the structure body (2) supporting the at least one artificial tooth (1) is coupled to the at least one artificial tooth (1), and
   an angle of the at least one artificial tooth (1) is variable.
(Item 2) The demonstration tool according to item 1, wherein the at least one artificial tooth (1) includes two or more teeth selected from a central incisor, a lateral incisor, a canine, a first premolar, a second premolar, a first molar, a second molar, a third molar, a deciduous central incisor, a deciduous lateral incisor, a deciduous canine, a first deciduous molar, and a second deciduous molar.
(Item 3) The demonstration tool according to item 1 or 2, wherein assuming that a single arbitrary artificial tooth has an angle having vertically 0° and laterally 0° when the artificial tooth coupled to the structure body (2) supporting the at least one artificial tooth (1) has a buccal surface or a labial surface disposed perpendicularly to a horizontal plane, the angle of the single arbitrary artificial tooth is variable to two or more angles selected from the angle having vertically 0° and laterally 0° and any other angle, and the any other angle satisfies conditions described below:
   when the single arbitrary tooth is located adjacent to the labial surface,
   vertically: equal to or more than -140° and less than 0°, or more than 0° and equal to or less than 140°, and
   laterally: equal to or more than -140° and equal to or less than 140°;
   when the single arbitrary tooth is located adjacent to a right buccal surface,
   vertically: equal to or more than -140° and less than 0°, or more than 0° and equal to or less than 140°, and
   laterally: equal to or more than -50° and equal to or less than 230°; and
   when the single arbitrary tooth is located adjacent to a left buccal surface,
   vertically: equal to or more than -140° and less than 0°, or more than 0° and equal to or less than 140°, and
   laterally: equal to or more than -230° and equal to or less than 50°.
(Item 4) The demonstration tool according to item 1 or 2, wherein each or one of the lost portion and the cavity is prepared in position that can be observed in directions perpendicular to two or more surfaces selected from an occlusal surface, the buccal surface, and the labial surface of the artificial tooth.
(Item 5) A demonstration method of filling to cure a dental filling composite resin in each or one of a lost portion and a cavity of an artificial tooth, the demonstration method comprising obtaining a repaired artificial tooth by filling to cure the dental filling composite resin in each or one of a lost portion and a cavity of a demonstration tool, wherein
   the demonstration tool includes
      at least one artificial tooth (1) including an artificial tooth (1a) having each or one of a lost portion and a cavity, and
      a structure body (2) supporting the at least one artificial tooth (1),
   the structure body (2) supporting the at least one artificial tooth (1) is coupled to the at least one artificial tooth (1), and
   an angle of the at least one artificial tooth (1) is variable.

### Effects of the Invention

The demonstration tool and the demonstration method according to the present disclosure facilitate provision preparation of lost portions and cavities at various sites of an artificial tooth as well as observation of repaired sites.

### BRIEF DESCRIPTION OF DRAWINGS

Fig. 1 is a view of artificial teeth including molars having parts (portions surrounded with black lines) provided with cavities filled with a dental filling composite resin having been cured (with graph paper indicating a horizontal plane);
Fig. 2 is a view of artificial teeth including central incisors and a canine having parts (portions surrounded with black lines) provided with lost portions filled with the dental filling composite resin having been cured;
Fig. 3 is a view of artificial teeth including a molar and a canine having parts (portions surrounded with black lines) provided with lost portions filled with the dental filling composite resin having been cured; and
Fig. 4 is a view of artificial teeth including a molar and a canine having parts (portions surrounded with black lines) provided with lost portions filled with the dental filling composite resin having been cured.

### DETAILED DESCRIPTION

In the entirety of the present disclosure, numerical values such as physical property values and contents have ranges that can be set as appropriate (e.g., by selecting from upper and lower limit values to be mentioned in the following items). Specifically, in a case where a numerical value φ has a lower limit such as A1, A2, or A3 and an upper limit such as B1, B2, or B3, the numerical value φ has a range such as A1 or more, A2 or more, A3 or more, B1 or less, B2 or less, B3 or less, from A1 to B1, from A1 to B2, from A1 to B3, from A2 to B1, from A2 to B2, from A2 to B3, from A3 to B1, from A3 to B2, or from A3 to B3. In the present disclosure, the expression "from... to..." is used, indicating numerical values described after "from" and "to" are included in the range as lower and upper limit values, respectively. Description is made in detail hereinafter to a demonstration tool, a demonstration method, and the like according to the present disclosure.

### <At Least One Artificial Tooth (1)>

At least one artificial tooth (1) has only to be similar in at least one of color tone, shape, and feel to a natural tooth, and is not limited in terms of a constituent thereof. The at least one artificial tooth (1) is preferably similar in color tone and shape to the natural tooth, and is more preferably similar in color tone, shape, and feel to the natural tooth.

Examples of color of the at least one artificial tooth (1) include one selected from A1, A2, A3, A3.5, A4, B1, B2, B3, B4, C1, C2, C3, C4, D1, D2, D3, D4, and color tones similar to these. The at least one artificial tooth (1) including a single tooth has color tone that is not necessarily a uniform color and may have gradation. The at least one artificial tooth (1) including two or more teeth coupled to a structure body (2) supporting the at least one artificial tooth (1) may be identical or different in color.

The at least one artificial tooth (1) may be an adult tooth or a deciduous tooth. In a case where the at least one artificial tooth (1) coupled to the structure body (2) supporting the at least one artificial tooth (1) includes a plurality of teeth, the at least one artificial tooth (1) preferably includes two or more teeth different in shape, and more preferably includes two or more teeth selected from a central incisor, a lateral incisor, a canine, a first premolar, a second premolar, a first molar, a second molar, a third molar, a deciduous central incisor, a deciduous lateral incisor, a deciduous canine, a first deciduous molar, and a second deciduous molar.

The at least one artificial tooth (1) coupled to the structure body (2) supporting the at least one artificial tooth (1) includes at least one tooth in number having an upper limit such as 50, 45, 40, 35, 34, 33, 32, 31, 30, 25, 20, 15, 10, 5, 4, 3, or 2, and a lower limit such as 45, 40, 35, 34, 33, 32, 31, 30, 25, 20, 15, 10, 5, 4, 3, 2, or 1. According to an embodiment, the at least one artificial tooth (1) coupled to the structure body (2) supporting the at least one artificial tooth (1) preferably includes one or more teeth. In a case where the at least one artificial tooth (1) coupled to the structure body (2) supporting the at least one artificial tooth (1) includes two or more teeth, the teeth may interpose a space or no space.

In the case where the at least one artificial tooth (1) coupled to the structure body (2) supporting the at least one artificial tooth (1) includes two or more teeth, the teeth form a teeth row that is not particularly limited in shape. Assuming that a single arbitrary tooth viewed from an occlusal surface has a transverse axis called an x axis, an anteroposterior axis called a y axis, and a deep axis called a z axis, a teeth row has a shape such as a shape extending along the x axis, a shape extending along the y axis, a shape obtained by shifting at least part of teeth aligned on the x axis toward each or one of the z axis and the y axis, a shape obtained by shifting at least part of teeth aligned on the y axis toward each or one of the z axis and the x axis, a shape identical to a natural teeth row, or a shape similar to the shape of the natural teeth row and obtained by shifting part of teeth toward one or more axes selected from the x axis, the y axis, and the z axis.

The at least one artificial tooth (1) includes at least one tooth having each or one of a lost portion and a cavity. Each or one of the lost portion and the cavity may be prepared by a demonstration experiencing person as a customer (also simply called an "experiencing person" in the present disclosure), or may be prepared by a demonstration provider as a seller (also simply called a "provider" in the present disclosure). At least one artificial tooth (1a) prepared with each or one of a lost portion and a cavity has a ratio in number (the at least one artificial tooth (1a) prepared with each or one of the lost portion and the cavity/the at least one artificial tooth (1)) having an upper limit such as 100, 95, 90, 85, 80, 75, 70, 65, 60, 55, 50, 45, 40, 35, 30, 25, 20, 15, 10, or 5%, and a lower limit such as 95, 90, 85, 80, 75, 70, 65, 60, 55, 50, 45, 40, 35, 30, 25, 20, 15, 10, 5, or 1%. The present disclosure refers to a cavity indicating any antrum, and a lost portion indicating a crack in a tooth as well as a thinned tooth. The at least one artificial tooth (1a) having each or one of the lost portion and the cavity includes at least one tooth in number having an upper limit such as 20, 18, 16, 14, 12, 10, 8, 6, 4, or 2, and a lower limit such as 18, 16, 14, 12, 10, 8, 6, 4, 2, or 1. According to an embodiment, the at least one artificial tooth (1a) having each or one of the lost portion and the cavity preferably includes 1 to 20 teeth. The demonstration tool according to the present disclosure has an angle variable to a plurality of degrees. In a case of executing demonstration including providing each of different artificial teeth with each or one of a lost portion and a cavity and filling to cure a dental filling composite resin, the demonstration can preferably indicate at one time that the dental filling composite resin is applicable to various cases. In view of this, the at least one artificial tooth (1a) having each or one of the lost portion and the cavity more preferably includes 2 to 20 teeth. Similarly, the at least one artificial tooth (1a) having each or one of the lost portion and the cavity preferably includes one or more teeth selected from a central incisor, a lateral incisor, a canine, a deciduous central incisor, a deciduous lateral incisor, and a deciduous canine, and one or more teeth selected from a first premolar, a second premolar, a first molar, a second molar, a third molar, a first deciduous molar, and a second deciduous molar.

The present disclosure exemplarily provides, as each or one of a lost portion and a cavity prepared in an artificial tooth, one or more cases, two or more cases, or three or more cases selected from fracture at a dental crown, a first-class cavity, a second-class cavity, a third-class cavity, a fourth-class cavity, a fifth-class cavity, and a sixth-class cavity.

The cavity of the artificial tooth (1a) has a ratio in depth (depth of the cavity/length of the artificial tooth (1a) having an upper limit such as 50, 45, 40, 35, 30, 25, 20, 15, 10, or 5%, and a lower limit such as 45, 40, 35, 30, 25, 20, 15, 10, 5, or 1%. According to an embodiment, the ratio in depth of the cavity of the artificial tooth (1a) (depth of the cavity/length of the artificial tooth (1a)) is preferably from 1 to 50%. The depth of the cavity of the artificial tooth (1a) has an upper limit such as 10, 9, 8, 7, 6, 5, 4, 3, 2, or 1 mm, and a lower limit such as 9, 8, 7, 6, 5, 4, 3, 2, 1, or 0.5 mm. According to an embodiment, the depth of the cavity of the artificial tooth (1a) is preferably from 0.5 to 10 mm, and is more preferably from 1 to 3 mm.

The cavity of the artificial tooth (1a) has a ratio in surface area (surface area of the cavity/surface area of an entire surface including the cavity) having an upper limit such as 60, 55, 50, 45, 40, 35, 30, 25, 20, 15, 10, 5, or 1%, and a lower limit such as 55, 50, 45, 40, 35, 30, 25, 20, 15, 10, 5, 1, or 0.5%. According to an embodiment, the ratio in surface area of the cavity of the artificial tooth (1a) (surface area of the cavity/surface area of the entire surface including the cavity) is preferably from 0.5 to 60%. The artificial tooth (1a) has diameter of a cavity surface having an upper limit such as 10, 9, 8, 7, 6, 5, 4, 3, 2, or 1 mm, and a lower limit such as 9, 8, 7, 6, 5, 4, 3, 2, 1, or 0.5 mm. According to an embodiment, the diameter of the cavity surface of the artificial tooth (1a) is preferably from 1 to 4 mm.

The lost portion of the artificial tooth (1a) has a ratio (volume of the lost portion/volume of the artificial tooth having no lost portion) having an upper limit such as 50, 45, 40, 35, 30, 25, 20, 15, 10, or 5%, and a lower limit such as 45, 40, 35, 30, 25, 20, 15, 10, 5, or 1%. According to an embodiment, the ratio of the lost portion of the artificial tooth (1a) (volume of the lost portion/volume of the artificial tooth having no lost portion) is preferably equal to or less than 50%. An excessively high ratio of the lost portion of the artificial tooth (1a) highly possibly increases time necessary for repair of a single portion. It is important to execute demonstration in a highly comprehensive manner in relatively short time. Accordingly, the ratio of the lost portion of the artificial tooth (1a) (volume of the lost portion/volume of the artificial tooth having no lost portion) is preferred not to be too high.

Examples of a method of preparing the artificial tooth (1a) with each or one of a lost portion and a cavity include a chemical method and a physical method. Examples of the chemical method include a method of applying liquid functioned to dissolve the artificial tooth (1a) to an arbitrary site of the artificial tooth (1a). Examples of the physical method include a method with use of a rotary machining tool (e.g., a handpiece), a method with use of a drill, and a method with use of a cutting tool (e.g., pliers, scissors, a knife, or a nail cutter). The handpiece may include a micromotor or an air turbine. Still alternatively, a contra-angle handpiece or a straight handpiece may be adopted in accordance with a site to be prepared with each or one of a lost portion and a cavity.

The at least one artificial tooth (1) according to the present disclosure may have a structure or a pattern similar to one or more symptoms selected from dental caries, dental calculus, and dental plaque.

The at least one artificial tooth (1) contains a constituent is not particularly limited as long as the constituent is used to manufacture a conventional artificial tooth. Examples of the constituent for the at least one artificial tooth (1) include a gold-silver-palladium alloy, a resin, zirconia, and ceramic. Furthermore, examples of an additive to any one of these constituents include a fluorescent agent. In a case where each of the at least one artificial tooth (1) and the dental filling composite resin contains the fluorescent agent, the fluorescent agent added to the at least one artificial tooth (1) and the fluorescent agent added to the dental filling composite resin are preferably different in fluorescent color.

### <Structure Body (2) Supporting At Least One Artificial Tooth (1)>

The structure body (2) (also simply called a "support structure body" in the present disclosure) configured to support the at least one artificial tooth (1) is not particularly limited as long as the structure body (2) is coupled to the at least one artificial tooth (1). Upon coupling, at least a dental crown of the at least one artificial tooth (1) has only to be exposed. Alternatively, the dental crown and a dental root may be exposed. In the case where the dental root is exposed, the exposed dental root has an area ratio having an upper limit such as 100, 90, 80, 70, 60, 50, 40, 30, 20, or 10%, and a lower limit such as 90, 80, 70, 60, 50, 40, 30, 20, 10, or 0%. In a case where two or more teeth are coupled to the structure body (2) supporting the at least one artificial tooth (1), the teeth include dental roots that may be different in exposure ratio. Note that the present disclosure assumes that the dental crown is exposed even in a case where the dental crown is provided with a structure or a pattern similar to one or more symptoms selected from dental caries, den;tal calculus, and dental plaque and a surface of the dental crown is not directly exposed.

The support structure body has a shape of such as one or more structures selected from a plate-shaped structure, a bar-shaped structure, and a bowl-shaped structure. The at least one artificial tooth (1) including a single tooth according to the present disclosure may be provided with a plurality of support structure bodies. For example, two plate-shaped structures may be prepared and may be fixed to interpose the at least one artificial tooth (1) including the single tooth. Other examples of the support structure body include a support structure body having a plate-shaped structure and a bowl-shaped structure, in other words, the support structure body having a plate-shaped structure provided thereon with a bowl-shaped structure shaped to fix the dental root of the at least one artificial tooth (1). Examples of the support structure body include a gum-like structure. When each or one of a lost portion and a cavity is prepared in the at least one artificial tooth (1), a tool used to prepared each or one of the lost portion and the cavity may vibrate significantly or may need to be operated delicately. The at least one artificial tooth (1) can be stably prepared with each or one of the lost portion and the cavity even if such a tool is used. Accordingly, the support structure body preferably includes one or more structures selected from a plate-shaped structure and a bowl-shaped structure, more preferably includes a plate-shaped structure and a bowl-shaped structure, and further preferably includes a gum-like structure.

The at least one artificial tooth (1) according to the present disclosure is coupled to the support structure body. In the present disclosure, the expression "coupling" may indicate fixedly coupling or operatively coupling. In the present disclosure, the expression "fixedly coupling" indicates that the at least one artificial tooth (1) and the structure body (2) supporting the at least one artificial tooth (1) are not shiftable in different directions. In the present disclosure, the expression "operatively coupling" indicates that the at least one artificial tooth (1) and the structure body (2) supporting the at least one artificial tooth (1) are shiftable in different directions. Examples of a coupling method include a chemically coupling method and a physically coupling method. Examples of the chemically coupling method include a coupling method with use of each or one of an adhesive and a glue (including a double-sided tape), and a method of filling to cure a resin in a die shaped to combine the at least one artificial tooth (1) and the support structure body. Examples of the physically coupling method include a coupling method with use of a hook-and-loop fastener, a method of fitting the dental root of the at least one artificial tooth (1) to a support structure body configured to match the shape of the dental root of the at least one artificial tooth (1), a method of sticking the at least one artificial tooth (1) having a drawing pin-like structure into the support structure body (in such a manner of sticking a drawing pin into a wall), a method of sticking the at least one artificial tooth (1) into the support structure body having a pinholder-like structure (in such a manner of sticking a flower into a pinholder), a coupling method with use of a magnet, a coupling method with use of a screw-like structure body, a coupling method with use of a bolt-like structure body, and a coupling method with use of a latch-like structure body. The drawing pin-like structure may have a shape of a dental root of a natural tooth.

The support structure body is not particularly limited in color tone. The color tone of the support structure body is preferably different from color of an artificial tooth, and is more preferably gum color.

An angle formed between the at least one artificial tooth (1) and the support structure body preferably corresponds to an angle formed between a horizontal plane and a line (tooth axis) penetrating the at least one artificial tooth (1) and the support structure body at a coupling point. The angle between the artificial tooth and the support structure body may alternatively correspond to an angle according to an actual case. The angle between a horizontal plane and the tooth axis of the at least one artificial tooth (1) that is coupled to the support structure body has an upper limit such as 360°, 350°, 340°, 330°, 320°, 310°, 300°, 290°, 280°, 270°, 260°, 250°, 240°, 230°, 220°, 210°, 200°, 190°, 180°, 170°, 160°, 150°, 140°, 130°, 120°, 110°, 100°, 90°, 80°, 70°, 60°, 50°, 40°, 30°, 20°, or 10°, and a lower limit such as 350°, 340°, 330°, 320°, 310°, 300°, 290°, 280°, 270°, 260°, 250°, 240°, 230°, 220°, 210°, 200°, 190°, 180°, 170°, 160°, 150°, 140°, 130°, 120°, 110°, 100°, 90°, 80°, 70°, 60°, 50°, 40°, 30°, 20°, 10°, or 0°. According to an embodiment, the angle between a horizontal plane and the tooth axis of the artificial tooth coupled to the support structure body is preferably from 0° to 360°.

The at least one artificial tooth (1) and the support structure body combined with each other may be configured identically to a teeth row model or a jaw model.

### <Regarding Variable Angle of At Least One Artificial Tooth (1)>

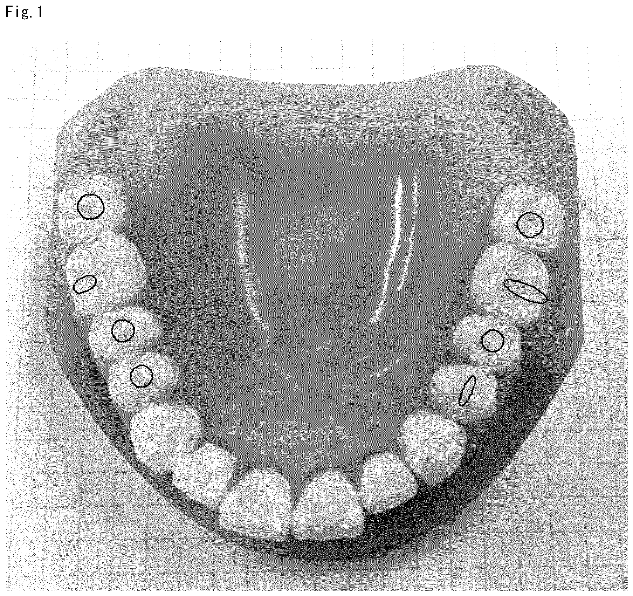

With regard to the expression "variable" in the expression "an angle of the at least one artificial tooth (1) is variable", the angle becomes variable when one or more elements selected from the at least one artificial tooth (1), the support structure body, and a structure body (3) to be described later are adjusted in terms of each or one of position and orientation such that the at least one artificial tooth (1) is directed to have a specific angle. The angle is recognized as being variable if the one or more elements having been adjusted are disposed to stand independently and do not swing when being released. An artificial tooth having a flat surface only adjacent to a dental root or the like (though not including the support structure body according to the present disclosure) has unevenness on remaining surfaces to be disposed unstably, and accordingly fails to have a variable angle. As a further condition to satisfy the state where "an angle of the at least one artificial tooth (1) is variable", at least one of the lost portion or the cavity of the at least one artificial tooth (1) also needs to be observed from a specific viewpoint at each of the angles of the at least one artificial tooth (1). More specifically, in a case where the viewpoint is positioned at an angle of 45° from the at least one artificial tooth (1), at least one of the lost portion or the cavity needs to be observed at each of an angle having vertically 0° and laterally 0° and an angle having vertically 90° and laterally 0° of the at least one artificial tooth (1). This is preferred because an experiencing person can easily observe demonstration at each of these angles. The at least one artificial tooth (1) has a variable angle in the present disclosure, and can thus obviously be directed at two or more angles. The two or more angles according to the present disclosure correspond to the angle having vertically 0° and laterally 0° and any other angle assuming that the at least one artificial tooth (1) including a single tooth coupled to the structure body (2) supporting the at least one artificial tooth (1) has the angle having vertically 0° and laterally 0° in a case where the at least one artificial tooth (1) including the single tooth has a buccal surface or a labial surface perpendicular to a horizontal plane. The present disclosure assumes that a "vertical direction" of an artificial tooth is parallel to a direction of a typical dental root in a case where the artificial tooth is viewed from a buccal surface or a labial surface. The present disclosure assumes that a "lateral direction" of an artificial tooth is perpendicular to a direction of a typical dental root in a case where the artificial tooth is viewed from a buccal surface or a labial surface. Examples of the angle having vertically 0° and laterally 0° include an angle shown in in Fig. 1. The figures of the present disclosure include graph paper indicating a horizontal plane.

The present disclosure provides the "any other angle" having a vertical degree having an upper limit such as 230°, 220°, 210°, 200°, 190°, 180°, 170°, 160°, 150°, 140°, 135°, 130°, 120°, 110°, 100°, 90°, 80°, 70°, 60°, 50°, 45°, 40°, 30°, 20°, 10°, 0°, -10°, - 20°, -30°, -40°, -50°, -60°, -70°, -80°, -90°, -100°, -110°, -120°, -130°, -140°, -150°, - 160°, -170°, -180°, -190°, -200°, -210°, or -220°, and a lower limit such as 220°, 210°, 200°, 190v°, 180°, 170°, 160°, 150°, 140°, 135°, 130°, 120°, 110°, 100°, 90°, 80°, 70°, 60°, 50°, 45°, 40°, 30°, 20°, 10°, 0°, -10°, -20°, -30°, -40°, -50°, -60°, -70°, -80°, -90°, - 100°, -110°, -120°, -130°, -140°, -150°, -160°, -170°, -180°, -190°, -200°, -210°, -220°, or -230°. According to an embodiment, the vertical degree of the any other angle is preferably from -230° to 230°, is more preferably -230° or more and less than 0°, or more than 0° and equal to or less than 230°, and is further preferably -140° or more and less than 0°, or more than 0° and equal to or less than 140°. The present disclosure provides the "any other angle" having a lateral degree having an upper limit such as 230°, 220°, 210°, 200°, 190°, 180°, 170°, 160°, 150°, 140°, 135°, 130°, 120°, 110°, 100°, 90°, 80°, 70°, 60°, 50°, 45°, 40°, 30°, 20°, 10°, 0°, -10°, -20°, -30°, -40°, -50°, -60°, -70°, -80°, - 90°, -100°, -110°, -120°, -130°, -140°, -150°, -160°, -170°, -180°, -190°, -200°, -210°, or -220°, and a lower limit such as 220°, 210°, 200°, 190°, 180°, 170°, 160°, 150°, 140°, 135°, 130°, 120°, 110°, 100°, 90°, 80°, 70°, 60°, 50°, 45°, 40°, 30°, 20°, 10°, 0°, -10°, - 20°, -30°, -40°, -50°, -60°, -70°, -80°, -90°, -100°, -110°, -120°, -130°, -140°, -150°, - 160°, -170°, -180°, -190°, -200°, -210°, -220°, or -230°. According to an embodiment, the any other angle preferably satisfies the following condition:
when the single arbitrary tooth is located adjacent to the labial surface,
vertically: equal to or more than -140° and less than 0°, or more than 0° and equal to or less than 140°, and
laterally: equal to or more than -140° and equal to or less than 140°;
when the single arbitrary tooth is located adjacent to a right buccal surface,
vertically: equal to or more than -140° and less than 0°, or more than 0° and equal to or less than 140°, and
laterally: equal to or more than -50° and equal to or less than 230°; and
when the single arbitrary tooth is located adjacent to a left buccal surface,
vertically: equal to or more than -140° and less than 0°, or more than 0° and equal to or less than 140°, and
laterally: equal to or more than -230° and equal to or less than 50°.

The any other angle more preferably satisfies the following condition:
when the single arbitrary tooth is located adjacent to the labial surface, vertically: 90°, and
laterally: 0°;
when the single arbitrary tooth is located adjacent to a right buccal surface, vertically: 90°, and
laterally: 0°; and
when the single arbitrary tooth is located adjacent to a left buccal surface, vertically: 90°, and
laterally: 0°.

The "any other angle" may preferably correspond to an angle enabling visual recognition of entire one or more surfaces selected from a labial surface, a buccal surface, and an occlusal surface that are difficult to be visually recognized at the angle having vertically 0° and laterally 0°.

This facilitates preparation of each or one of a lost portion and a cavity in the buccal surface and the labial surface as well as the occlusal surface, and also facilitates observation.

The vertical degree having a "plus" value corresponds to a degree of the artificial tooth attached to an individual and retrodeviated. The vertical degree having a "minus" value corresponds to a degree of the artificial tooth attached to an individual and antedeviated. The lateral degree having a "plus" value corresponds to a degree of the artificial tooth rotated counterclockwise from the occlusal surface. The lateral degree having a "minus" value corresponds to a degree of the artificial tooth rotated clockwise from the occlusal surface.

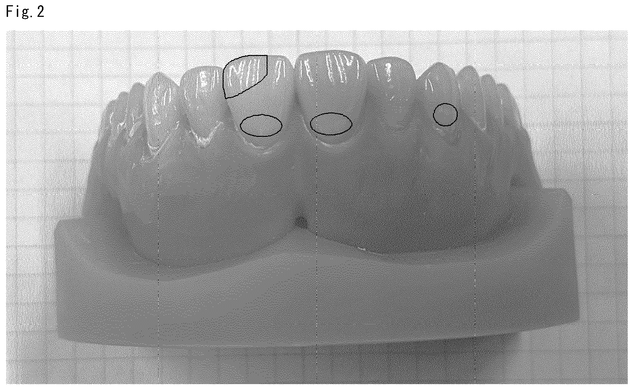

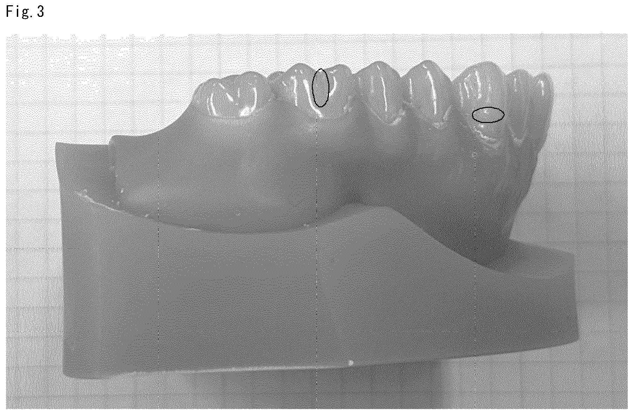

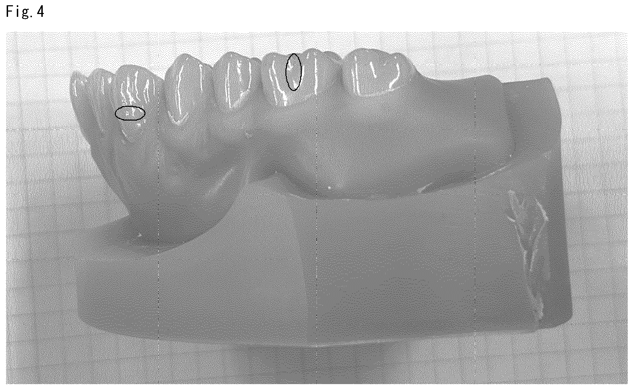

The present disclosure provides Fig. 2 exemplarily showing the angle having vertically 90° and laterally 0° of a single arbitrary tooth located adjacent to a labial surface. The present disclosure provides Fig. 3 exemplarily showing the angle having vertically 90° and laterally 0° of a single arbitrary tooth located adjacent to a right buccal surface. The present disclosure provides Fig. 4 exemplarily showing the angle having vertically 90° and laterally 0° of a single arbitrary tooth located adjacent to a left buccal surface.

Examples of a method of allowing the at least one artificial tooth (1) to have a variable angle include the following methods (α) to (δ).
(α) Manufacturing the support structure body having a specific shape
(β) Additionally providing the structure body (3) configured to be coupled to the support structure body at the point other than a coupling point with the at least one artificial tooth (1), and adjusting the angle with use of the structure body (3)
(γ) Providing a structure body (4) that is attached to the structure body (3) and one or more elements selected from the artificial tooth and the support structure body, and that is configured to couple the structure body (3) and the one or more selected elements
(δ) Operatively coupling the at least one artificial tooth (1) and the support structure body

Examples of the method (α) include providing the support structure body with a plurality of flat surfaces and disposing each of the flat surfaces as a bottom surface.

Examples of the method (β) include providing the structure body (3) as a tool such as a vise or a clamp, coupling the structure body (3) to the support structure body, and adjusting the angle with use of the tool such as the vise or the clamp (β-1).

Examples of the method (γ) include attaching the structure body (4) (e.g., a magnet) to each of two or more elements selected from the artificial tooth, the support structure body, and the structure body (3), and causing interaction between the structure bodies (4) to be coupled to each other at an arbitrary angle (γ-1), and attaching the structure body (4) (e.g., a magnet) to one or more elements selected from the artificial tooth, the support structure body, and the structure body (3), adopting a material (e.g., a metal) interacting with the structure body (4) and constituting one or more elements selected from the artificial tooth, the support structure body, and the structure body (3) and not provided with the structure body (4), and coupling the structure body (4) and the one or more selected elements at an arbitrary angle (y-2).

Examples of the method (γ) include attaching a magnet to each or one of the at least one artificial tooth (1) and the support structure body, and causing the magnet to adhere onto a hemisphere (the structure body (3)) made of iron by magnetic force to change the angle of at least one artificial tooth (1).

Examples of the structure body (4) include a hook-and-loop fastener, and a combination of an inserted structure (a bar-shaped structure) and a receiving structure (a hole-shaped structure) (e.g., a snap fastener, or a combination of a screw and a threaded hole).

Examples of the method (δ) include providing a movable structure at the coupling point between the at least one artificial tooth (1) and the support structure body.

Among the methods (α) to(δ), the method (α) or (γ) is preferred in view of the fact that an operative field is secured for preparation of each or one of a lost portion and a cavity to the artificial tooth, and the fact that a visual field can be easily secured for observation.

The variable angle of the at least one artificial tooth (1) is preferred because the above described problems can be solved as well as because of reproducibility of angles adopted on an actual site, such as both an angle for a case where a person is seated on a dental chair unit and an angle for a case where a backrest is reclined, to enable dental specialists to comprehensively check desired matters.

### <Other Structure Bodies>

The demonstration tool according to the present disclosure may be surrounded with any structure body other than those described above in detail as long as the structure body does not deteriorate facilitated observation and facilitated preparation of a cavity or a lost portion. Examples of the other structure body include a structure body for reproduction of an intraoral portion and the periphery thereof. In view of facilitated observation and facilitated provision preparation of a cavity or a lost portion, it is preferred not to provide any structure body in directions perpendicular to the occlusal surface, the buccal surface, and the labial surface of the at least one artificial tooth (1).

### <Dental Filling Composite Resin>

Any conventional and publicly-known dental filling composite resin is applicable with no particular limitation. Particularly preferably, a dental filling composite resin characterized by high color tone adaptability is filled and cured in each or one of a lost portion and a cavity at each of various sites, to achieve natural repair of the teeth at any site due to such high color tone adaptability. The present disclosure refers to "high color tone adaptability" or "excellent color tone adaptability" indicating a state where considerably close observation is required to distinguish through visual inspection between a natural tooth and a dental filling composite resin having been cured. Assume that the demonstration tool to be repaired include artificial teeth having a plurality of different color tones (e.g., two or more color tones selected from A1 to D4). In a preferred exemplary case, the dental filling composite resin is filled and cured in each or one of a lost portion and a cavity of each of the artificial teeth to exhibit adaptability to the plurality of color tones and prove high color tone adaptability.

### <Demonstration>

In the present disclosure, demonstration indicates presentation to a person. Accordingly, the presentation is not particularly limited in terms of its mode. The presentation may be provided through the Internet, may be provided in front of an experiencing person, or may be provided by mean of recorded video.

### <Demonstration Method>

The present disclosure provides a demonstration method including filling to cure a dental filling composite resin in each or one of a lost portion and a cavity of an artificial tooth.

The present disclosure exemplarily provides demonstration comprising:
(1) providing each or one of a dental caries structure and a pattern in at least one artificial tooth (1) included in a demonstration tool including
   the at least one artificial tooth (1) including an artificial tooth (1a) having each or one of a lost portion and a cavity, and
   a structure body (2) supporting the at least one artificial tooth (1),
   the structure body (2) supporting the at least one artificial tooth (1) being coupled to the at least one artificial tooth (1), and
   an angle of the at least one artificial tooth (1) being variable;
(2) scaling each or one of a site provided with the dental caries structure and a site provided with the pattern;
(3) applying a primer or an adhesive to the scaled site;
(4) filling the scaled site with a dental filling composite resin;
(5) photo-curing the dental filling composite resin thus filled; and
(6) checking a site repaired with use of the dental filling composite resin.
   Step (1) to step (2) may be executed by a provider prior to the demonstration,
   step (3) is not necessarily executed, and
   the demonstration method according to the present disclosure has only to include at least step (4) to step (5).

In step (6), in a case where each or one of the dental filling composite resin and the artificial tooth contains a fluorescent agent, the fluorescent agent may emit light to emphasize a difference in color between the dental filling composite resin and the artificial tooth.

As described above, the present disclosure provides a demonstration method comprising obtaining a repaired artificial tooth by filling to cure a dental filling composite resin in each or one of a lost portion and a cavity of a demonstration tool, wherein
the demonstration tool includes
   at least one artificial tooth (1) including an artificial tooth (1a) having each or one of a lost portion and a cavity, and
   a structure body (2) supporting the at least one artificial tooth (1),
the structure body (2) supporting the at least one artificial tooth (1) is coupled to the at least one artificial tooth (1), and
an angle of the at least one artificial tooth (1) is variable.

## Claims

1. A demonstration tool used for demonstration including filling to cure a dental filling composite resin in each or one of a lost portion and a cavity of an artificial tooth, the demonstration tool comprising:
at least one artificial tooth (1) including an artificial tooth (1a) having each or one of a lost portion and a cavity; and
a structure body (2) supporting the at least one artificial tooth (1),
wherein
the structure body (2) supporting the at least one artificial tooth (1) is coupled to the at least one artificial tooth (1),
an angle of the at least one artificial tooth (1) is variable,
the at least one artificial tooth (1) includes two or more teeth selected from a central incisor, a lateral incisor, a canine, a first premolar, a second premolar, a first molar, a second molar, a third molar, a deciduous central incisor, a deciduous lateral incisor, a deciduous canine, a first deciduous molar, and a second deciduous molar, and
the structure body (2) supporting the at least one artificial tooth (1) is a gum-like structure.

2. The demonstration tool according to claim 1, wherein assuming that a single arbitrary artificial tooth has an angle having vertically 0° and laterally 0° when the artificial tooth coupled to the structure body (2) supporting the at least one artificial tooth (1) has a buccal surface or a labial surface disposed perpendicularly to a horizontal plane, the angle of the single arbitrary artificial tooth is variable to two or more angles selected from the angle having vertically 0° and laterally 0° and any other angle, and the any other angle satisfies conditions described below:
when the single arbitrary tooth is located adjacent to the labial surface,
vertically: equal to or more than -140° and less than 0°, or more than 0° and equal to or less than 140°, and
laterally: equal to or more than -140° and equal to or less than 140°;
when the single arbitrary tooth is located adjacent to a right buccal surface,
vertically: equal to or more than -140° and less than 0°, or more than 0° and equal to or less than 140°, and
laterally: equal to or more than -50° and equal to or less than 230°; and
when the single arbitrary tooth is located adjacent to a left buccal surface,
vertically: equal to or more than -140° and less than 0°, or more than 0° and equal to or less than 140°, and
laterally: equal to or more than -230° and equal to or less than 50°.

3. The demonstration tool according to claims 1 or 2, wherein each or one of the lost portion and the cavity is prepared in a position that can be observed in directions perpendicular to two or more surfaces selected from an occlusal surface, the buccal surface, and the labial surface of the artificial tooth

4. A demonstration method of filling to cure a dental filling composite resin in each or one of a lost portion and a cavity of an artificial tooth, the demonstration method comprising obtaining a repaired artificial tooth by filling to cure the dental filling composite resin in each or one of a lost portion and a cavity of a demonstration tool,
wherein
the demonstration tool includes
at least one artificial tooth (1) including an artificial tooth (1a) having each or one of a lost portion and a cavity, and
a structure body (2) supporting the at least one artificial tooth (1),
the structure body (2) supporting the at least one artificial tooth (1) is coupled to the at least one artificial tooth (1), and
an angle of the at least one artificial tooth (1) is variable,
the at least one artificial tooth (1) includes two or more teeth selected from a central incisor, a lateral incisor, a canine, a first premolar, a second premolar, a first molar, a second molar, a third molar, a deciduous central incisor, a deciduous lateral incisor, a deciduous canine, a first deciduous molar, and a second deciduous molar, and
the structure body (2) supporting the at least one artificial tooth (1) is a gum-like structure.
